# EUROPÄISCHE PATENTSCHRIFT

(11) **EP 3 283 237 B1**
(45) Veröffentlichungstag und Bekanntmachung des Hinweises auf die Patenterteilung: **27.10.2021**
(21) Anmeldenummer: 16716838.4
(22) Anmeldetag: 01.04.2016
(51) Int. Cl.: B07B 4/08, B07B 13/16, C01B 33/037

(54) **VORRICHTUNG UND VERFAHREN ZUR KLASSIERUNG UND ENTSTAUBUNG VON POLYSILICIUMGRANULAT**
DEVICE AND METHOD FOR CLASSIFYING AND DEDUSTING POLYSILICON GRANULAR MATERIAL
DISPOSITIF ET PROCÉDÉ DE CRIBLAGE ET DE DÉPOUSSIÉRAGE DE GRANULAT DE POLYSILICIUM

(30) Priorität: 16.04.2015 DE 102015206849
(43) Veröffentlichungstag der Anmeldung: 21.02.2018
(73) Patentinhaber: Wacker Chemie AG, 81737 München (DE)
(72) Erfinder: FRICKE, Michael, 84489 Burghausen (DE); BRIXEL, Martin, 84375 Kirchdorf (DE); ENGGRUBER, Robert, 84489 Burghausen (DE); HAUSWIRTH, Rainer, 84375 Kirchdorf (DE)
(74) Vertreter: Belz, Ferdinand
(86) Internationale Anmeldenummer: PCT/EP2016/057246
(87) Internationale Veröffentlichungsnummer: WO 2016/165959

(56) Entgegenhaltungen:
- EP-A1- 2 338 835
- EP-A1- 2 631 215
- DE-A1- 4 240 047
- DE-A1-102013 218 003
- DE-U1- 9 409 476
- JP-U- S6 328 181
- US-A1- 2005 279 277

## Beschreibung

Gegenstand der Erfindung sind eine Vorrichtung und ein Verfahren zur Klassierung und Entstaubung von Polysiliciumgranulat.

Polykristallines Siliciumgranulat oder kurz Polysiliciumgranulat wird in einem Wirbelschichtreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Pyrolysereaktion an der heißen Partikeloberfläche. Dabei scheidet sich elementares Silicium auf den Siliciumpartikeln ab, und die einzelnen Partikel wachsen im Durchmesser an. Durch den regelmäßigen Abzug von angewachsenen Partikeln und Zugabe kleinerer Siliciumpartikel als Keimpartikel kann das Verfahren kontinuierlich mit allen damit verbundenen Vorteilen betrieben werden. Als siliciumhaltiges Eduktgas können Silicium-Halogenverbindungen (z.B. Chlorsilane oder Bromsilane), Monosilan (SiH₄), sowie Mischungen dieser Gase mit Wasserstoff zum Einsatz kommen.

Das Polysiliciumgranulat wird üblicherweise nach dessen Herstellung mittels einer Siebanlage in zwei oder mehr Fraktionen oder Klassen geteilt (Klassierung).

Die kleinste Siebfraktion (Siebunterkorn) kann anschließend in einer Mahlanlage zu Keimpartikeln verarbeitet und dem Reaktor zugegeben werden.

Die Siebzielfraktion wird üblicherweise verpackt und zum Kunden transportiert. Der Kunde verwendet das Polysiliciumgranulat u.a. zum Züchten von Einkristallen nach dem Czochralski-Verfahren (Cz-Verfahren).

Zur Klassierung werden Siebmaschinen eingesetzt. Eine Siebmaschine ist allgemein eine Maschine zum Sieben, also der Trennung (Separation) von Feststoffgemischen nach Korngrößen. Nach Bewegungscharakteristik wird zwischen Planschwingsiebmaschinen und Wurfsiebmaschinen unterschieden. Der Antrieb der Siebmaschinen erfolgt meist elektromagnetisch bzw. durch Unwuchtmotoren oder - getriebe. Die Bewegung des Siebbelags dient dem Weitertransport des Aufgabeguts in Sieblängsrichtung und dem Durchtritt der Feinfraktion durch die Maschenöffnungen. Im Gegensatz zu Planschwingsiebmaschinen tritt bei Wurfsiebmaschinen neben der horizontalen auch eine vertikale Siebbeschleunigung auf.

Bei den Wurfsiebmaschinen überlagern sich vertikale Wurfbewegungen mit leichten Drehbewegungen. Dies führt dazu, dass sich das Probengut über die gesamte Fläche des Siebbodens verteilt und die Partikel gleichzeitig eine Beschleunigung in vertikale Richtung erfahren (hochgeworfen werden). In der Luft können sie freie Drehungen durchführen und werden beim Zurückfallen auf das Sieb mit den Maschen des Siebgewebes verglichen. Sind die Partikel kleiner als diese, so passieren sie das Sieb, sind sie größer, werden sie erneut hochgeworfen. Die Drehbewegung stellt dabei sicher, dass sie beim nächsten Auftreffen auf dem Siebgewebe eine andere Orientierung haben und so vielleicht doch durch eine Maschenöffnung gelangen.

Bei Plansiebmaschinen vollzieht der Siebturm eine horizontal kreisende Bewegung in einer Ebene. Hierdurch behalten die Partikel auf dem Siebgewebe größtenteils ihre Orientierung bei. Plansiebmaschinen werden vorzugsweise für nadel-, plättchenförmige, längliche oder faserige Siebgüter eingesetzt, bei denen ein Hochwerfen des Probengutes nicht zwingend von Vorteil ist.

Eine spezielle Art ist die Mehrdecksiebmaschine, die gleichzeitig mehrere Korngrößen klassieren kann. Sie sind konzipiert für eine Vielzahl scharfer Trennungen im Mittelbis Feinstkornbereich. Das Antriebsprinzip beruht bei Mehrdeck-Plansiebmaschinen auf zwei gegenläufig arbeitenden Unwuchtmotoren, die eine lineare Schwingung erzeugen. Das Siebgut bewegt sich geradlinig über die horizontale Trennfläche. Dabei arbeitet die Maschine mit geringer Schwingbeschleunigung. Durch ein Baukastensystem können eine Vielzahl von Siebdecks zu einem Siebstapel zusammengestellt werden. Somit können im Bedarfsfall unterschiedliche Körnungen in einer einzigen Maschine hergestellt werden, ohne dass Siebbeläge gewechselt werden müssen. Durch mehrfache Wiederholung gleicher Siebdeckfolgen kann dem Siebgut viel Siebfläche angeboten werden.

US 7959008 B2 beansprucht ein Verfahren zum Aussieben von ersten Partikeln aus einem erste und zweite Partikel umfassenden Granulat durch Fördern des Granulats entlang einer ersten Siebfläche, wobei das Granulat entlang der Siebfläche zwischen dieser und einer sich entlang der Siebfläche erstreckenden Abdeckung gefördert wird und durch die Abdeckung bedingt die ersten Partikel mit ihren Längsachsen entlang der Siebfläche verlaufend ausgerichtet werden, wobei Längenerstreckung eines jeden ersten Partikels grösser als Maschenweite des die erste Siebfläche bildenden Siebs ist und Längenerstreckung der zweiten Partikel gleich oder kleiner als die Maschenweite ist. Das Verfahren sieht vor, in einer vorgeschalteten Siebstufe Staubpartikel abzutrennen. Durch die Wurfbewegung werden locker anhaftende mikrometergroße Staubpartikel abgelöst und über eine Absaugung oberhalb und/oder unterhalb des Siebdecks aus der Siebanlage abgeführt.

US 2012/0052297 A1 offenbart ein Verfahren zur Entstaubung von polykristallinem Silicium, das in Form von Granulat oder in Form von Stäben, Stabstücken oder Bruchstücken vorliegt, mittels Druckluft oder Trockeneis, ohne jegliche nasschemische Behandlung, um Siliciumstaub vom polykristallinen Silicium zu entfernen.

In US 2014/0262981 A1 werden eine Vorrichtung und ein Verfahren zur Entstaubung von Polysiliciumgranulat beschrieben. Dabei fällt das Polysiliciumgranulat auf einen kegelförmigen Verteiler, der sich in einem zylindrisch geformten ausgekleideten Behälter befindet, wodurch das Polysiliciumgranulat in eine radial nach außen gerichtete Bewegung umgelenkt wird. Unterhalb des kegelförmigen Verteilers sind Düsen positioniert, aus denen ein inertes Gas in den Behälter eingeblasen wird, um den freigesetzten Staub im Gegenstrom zum hereinfließenden Polysiliciumgranulat über einen separaten Anschluss auszutragen. Zur zusätzlichen Unterstützung des Austrags kann am Austragsstutzen ein Vakuum angelegt werden.

In US 6609870 B2 wird ein pneumatisches Fördersystem für Polysiliciumgranulat beschrieben, das eine Apparatur zum Entstauben beinhaltet. Bei diesem System wird Polysiliciumgranulat über eine Rohrleitung von einem ersten Behälter pneumatisch senkrecht nach oben in einen zweiten Behälter gefördert. In diesem zweiten Behälter wird das Polysiliciumgranulat durch die Schwerkraft über Leitbleche in einen Auffangbehälter gefördert. Durch den Kontakt mit den Leitblechen wird Staub vom Polysiliciumgranulat mobilisiert und durch den überlagerten Gasstrom abgesaugt.

Das Dokument DE-A1-102013218003 offenbart ein Verfahren, bzw. eine Vorrichtung, zur Klassierung und Entstaubung von Polysiliciumgranulat gemäss dem Oberbegriff des Anspruchs 1, bzw. des Anspruchs 7.

Es ist bekannt, dass polykristallines Silicium-Granulat oberflächlich anhaftende Staubpartikel aufweist. Bei den anhaftenden Staubpartikeln handelt es sich vorzugweise um Partikel einer Größe von weniger als 10 µm. Diese anhaftenden Staubpartikel sind entweder die zuvor erwähnten prozessbedingten Siliciumpartikel, Kunststoff- oder Metallabrieb durch den Feststofftransport oder beliebige organische bzw. anorganische Partikel aus dem Umfeld.

Diese Staubpartikel wirken sich nachteilig auf die Weiterverarbeitung aus, da sie beim Aufschmelzen aufschwimmen und damit zu Ansetzproblemen beim CZ-Ziehen führen können. Zudem ist aufgrund solcher Staubpartikel eine Belagbildung an Rohrleitungen und Armaturen zu beklagen. Aufgrund ihrer großen spezifischen Oberfläche stellen Staubpartikel weiterhin potentielle Kontaminationsträger dar. Daher besteht das Bedürfnis, diese Staubpartikel zu entfernen.

Im Stand der Technik wird die Mobilisierung der oberflächlich anhaftenden Staubpartikel entweder durch Pralleffekte an dafür vorgesehenen Oberflächen in Einzelapparaten bzw. durch Bewegung während des Siebprozesses hervorgerufen. Die mobilisierten Staubpartikel werden durch Absaugungen aus der Anlage abgeführt. Teilweise wird die Absaugung durch Einblasen eines Gases unterstützt.

Im Stand der Technik war zu beobachten, dass das Polysiliciumgranulat beim Entstauben durch das Umfeld kontaminiert wurde. Dies ist darauf zurückzuführen, dass Verunreinigungen aus dem Umfeld in die Siebanlage hineingesaugt werden. Aus der beschriebenen Problematik ergab sich die Aufgabenstellung der Erfindung. Die Aufgabe der Erfindung wird gelöst durch ein Verfahren zur Klassierung und Entstaubung von Polysiliciumgranulat gemäß Anspruch 1.

Die Aufgabe wird auch gelöst durch eine Vorrichtung zur Klassierung und Entstaubung von Polysiliciumgranulat gemäß Anspruch 7.

Das Verfahren sieht vor, dass die anhaftenden Staubpartikel sich durch eine Wurfbewegung auf Siebflächen einer Siebanlage vom Polysiliciumgranulat lösen.

Die Siebanlage ist gasdicht ausgeführt. Die Siebanlage umfasst einen Deckel und einen Boden. Erfindungsgemäß erfolgt ein gleichmäßiges Einblasen eines Gasstroms am Deckel der Siebanlage über Filtrationsmatten während des Siebprozesses, wodurch die Staubpartikel im Gleichstrom des Partikelflusses zu einem Austrag am Boden der Siebanlage transportiert werden. Die Staubpartikel werden als separate Fraktion am Boden der Siebanlage abgetrennt.

Um bei der Entstaubung den Einfluss der Umgebung auszuschließen, wird die Entstaubung in der Siebanlage unter Überdruck gegenüber der Umgebung betrieben.

Um sicherzustellen, dass ein konstanter Überdruck an der Siebanlage anliegt, wird die Zu- und Abfuhr des Gases vorzugweise über einen Regelkreis gesteuert.

Im Stand der Technik stellte sich beim Absaugen ein Unterdruck gegenüber der Umgebung im Siebtrog ein. Bei leichten Undichtigkeiten der Anlage bzw. bei einem Anlagensetup, das einen Gasaustausch mit der Umgebung zuließ, konnten Verunreinigungen aus dem Umfeld in die Anlage hineingesaugt werden, die das Polysiliciumgranulat oberflächlich kontaminierten.

Durch eine Kombination der Merkmale "gasdichte Ausführung der Siebanlage" und "Betrieb in Überdruck gegenüber der Umgebung" in der vorliegenden Erfindung kann dies vermieden werden.

Die Gasströmung dient dem Abtransport der Staubpartikel, jedoch nicht der Ablösung der Staubpartikel vom Polysiliciumgranulat. Das Ablösen der Staubpartikel wird durch die Wurfbewegung des Polysiliciumgranulats in der Siebanlage und durch Pralleffekte während der Aufgabe bewerkstelligt.

Die Gasströmung ist im Gleichstrom des Partikelflusses vorgesehen.

Bei der Einheit zur Aufgabe des Polysiliciumgranulats in die Siebanlage handelt es sich in einer Ausführungsform um eine Dosiereinheit.

Es wird vorzugweise Gas in der Einheit zur Aufgabe des Polysiliciumgranulats, vorzugsweise in einer Dosiereinheit, und über den Deckel der Siebanlage eingeblasen.

Um in der Siebanlage eine Vergleichmäßigung des Gases zu gewährleisten und um einen Freistrahl in die Siebanlage hinein zu vermeiden, wird das Gas über Filtrationsmatten (mikroporöse Kunststoffkörper), die am Deckel der Siebanlage angeordnet sind, gleichmäßig eingebracht.

Die Anzahl der Gaseinspeisepunkte durch die Filtrationsmatten am Deckel der Siebanlage kann beliebig variiert werden, sofern die Anschlüsse einbautechnisch am Deckel der Siebanlage platziert werden können.

Eine bevorzugte Anzahl sind 1 bis 50 Einspeisepunkte am Deckel pro m² Siebfläche, besonders bevorzugt 30 bis 40 Einspeisepunkte am Deckel pro m² Siebfläche.

Für die Gaszufuhr zu den Filtrationsmatten gilt, dass entweder jeder Einspeisepunkt mit einem eigenen Gasstrom versorgt und geregelt wird oder dass Einspeisepunkte in Gruppen mit bis zu 10 Einspeisepunkten zusammengefasst versorgt und geregelt werden.

Falls eine Gruppe von mehreren Einspeisepunkten gemeinsam mit Gas versorgt wird, sollte der Gaseinspeisung eine Querschnittsverengung (z.B. mittels Lochblenden oder mittels Lavaldüsen) vorgeschaltet werden, damit gleiche Volumenströme an den Einspeisepunkten vorliegen.

Zur weiteren Unterstützung des Austragens der Staubpartikel wird am Boden der Siebanlage Gas in Richtung des Austrags eingeblasen.

Die kleinste Produktfraktion des Siebgutes wird durch eine letzte Siebstufe von der Staubfraktion getrennt, so dass der Staub über den Boden der Siebanlage über einen eigenen Auslass ausgetragen wird.

Durch die unterschiedlichen Aufgabepunkte des Gases ergibt sich ein optimales Strömungsprofil in der Siebanlage, um den pneumatischen Austrag der Staubpartikel aus der Siebanlage bestmöglich zu vollführen.

Zur weiteren Entstaubung werden vorzugweise die Produktfraktionen in der jeweiligen Austragsleitung im Gegenstrom mit einem Gas zusätzlich beaufschlagt.

Die mit Staubpartikeln beladenen Gasströme der jeweiligen Austragsleitungen werden mit der Austragsleitung des Staubs aus der Siebanlage zusammengeführt.

Der Volumenstrom des mit Staubpartikeln beladenen Abgasstroms wird derart geregelt, dass ein Überdruck gegenüber der Umgebung in der Siebanlage anliegt.

Durch die Regelung ist außerdem sichergestellt, dass keine Staubpartikel durch die Gegenstromentstaubung unterhalb der Siebanlage zurück in die Siebanlage geblasen werden.

In der Siebanlage soll eine mittlere Gasgeschwindigkeit von 0,1 bis 0,4 m/s, besonders bevorzugt von 0,2 bis 0,3 m/s vorliegen.

Die mittleren Gasgeschwindigkeiten können aus dem zugeführten und messbaren Gasvolumenstrom berechnet werden.

Eine mittlere Gasgeschwindigkeit von 0,2 m/s kann beispielsweise mit einem auf die Siebfläche bezogenen Gasdurchsatz unter Normbedingungen von etwa 200 m³/(h m²) eingestellt werden.

In der Siebanlage sollte ein Überdruck gegenüber der Umgebung von 5 bis 50 mbar, bevorzugt 10 bis 20 mbar vorliegen.

Nach dem Austritt aus der Siebanlage werden die Staubpartikel vorzugweise pneumatisch gefördert.

Hierfür kann über eine Gasaufgabeeinheit (nach einem ähnlichen Prinzip wie bei einer Venturidüse) Gas der Austragsleitung zugeführt werden.

Vorzugweise wird über eine Filtereinheit der Feinstaub aus dem abgeführten Gasstrom entfernt.

Das gereinigte Gas kann entweder als Abgas an die Umwelt abgegeben werden oder in die Gasversorgung wieder eingespeist und im Kreis gefahren werden.

Als Gase eignen sich gereinigte Luft, Stickstoff oder andere inerte Gase.

Zur Vermeidung von Gasverlusten, der Reduzierung des Sauerstoffgehalts und einer erhöhten Partikelkonzentration durch Staubaustritte muss die erfindungsgemäße Siebanlage weiterhin so aufgebaut sein, dass das eingeblasene Gas nicht in den Arbeitsbereich um die Siebanlage herum austreten kann.

Falls dennoch Undichtigkeiten der Siebanlage auftreten, wird durch die Fahrweise mit Überdruck gegenüber der Umgebung sichergestellt, dass keine Verunreinigungen von außen in die Siebanlage gelangen können.

Die Gefahr einer oberflächlichen Verunreinigung durch das Umfeld wird durch diese Fahrweise ausgeschlossen.

Dass stets ein Überdruck gegenüber der Umgebung an der Anlage anliegt, wird durch Druckmessung in der Siebanlage und durch eine entsprechende Regelung der Zu- und Abfuhr des Entstaubungsgases sichergestellt.

### Kurzbeschreibung der Figuren

Fig. 1 zeigt eine Vorrichtung zur Klassierung und Entstaubung von Polysiliciumgranulat.
**Fig. 2** zeigt die Feinstaubkonzentrationen von gemäß Stand der Technik (Vergleichsbeispiel) klassiertem und entstaubtem Polysiliciumgranulat und für drei beispielhafte Ausführungsformen der Erfindung (erfindungsgemäße Klassierung und Entstaubung).

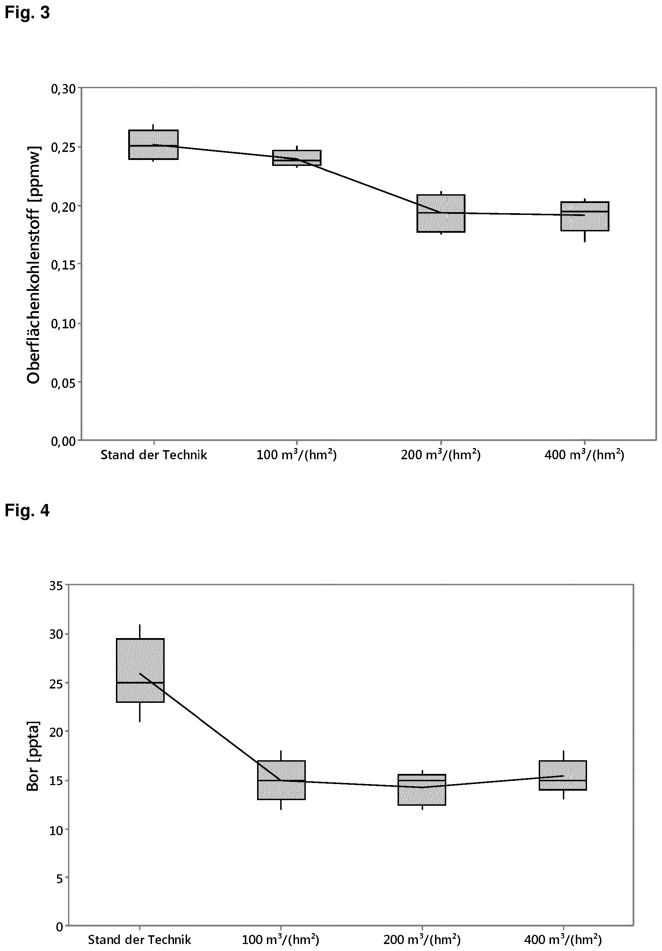

**Fig. 3** zeigt die Konzentrationen von oberflächlichem Kohlenstoff an gemäß Stand der Technik (Vergleichsbeispiel) klassiertem und entstaubtem Polysiliciumgranulat und für drei beispielhafte Ausführungsformen der Erfindung (erfindungsgemäße Klassierung und Entstaubung).
**Fig. 4** zeigt die Konzentrationen von Bor von gemäß Stand der Technik (Vergleichsbeispiel) klassiertem und entstaubtem Polysiliciumgranulat und für drei beispielhafte Ausführungsformen der Erfindung (erfindungsgemäße Klassierung und Entstaubung).

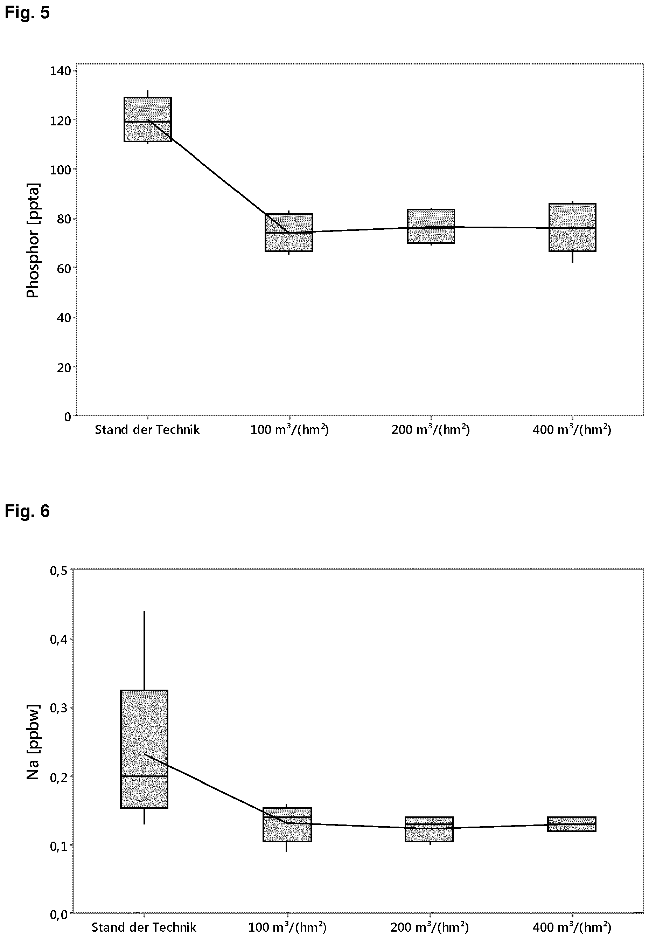

**Fig. 5** zeigt die Konzentrationen an Phosphor von gemäß Stand der Technik (Vergleichsbeispiel) klassiertem und entstaubtem Polysiliciumgranulat und für drei beispielhafte Ausführungsformen der Erfindung (erfindungsgemäße Klassierung und Entstaubung).
**Fig. 6** zeigt die Konzentrationen an Natrium von gemäß Stand der Technik (Vergleichsbeispiel) klassiertem und entstaubtem Polysiliciumgranulat und für drei beispielhafte Ausführungsformen der Erfindung (erfindungsgemäße Klassierung und Entstaubung).

### Liste der verwendeten Bezugszeichen

- **1**: Siebanlage
- **2**: Produktaufgabe
- **3**: Deckel der Siebanlage
- **4**: Boden der Siebanlage
- **5**: Siebfläche / Siebdeck
- **6**: Gaszuführung
- **7**: Gasabführung beladen mit Staubpartikeln
- **8**: Filter für Staubpartikel
- **9**: Austrag Fraktion Unterkorn
- **10**: Austrag Fraktion Zielkorn
- **11**: Austrag Fraktion Oberkorn

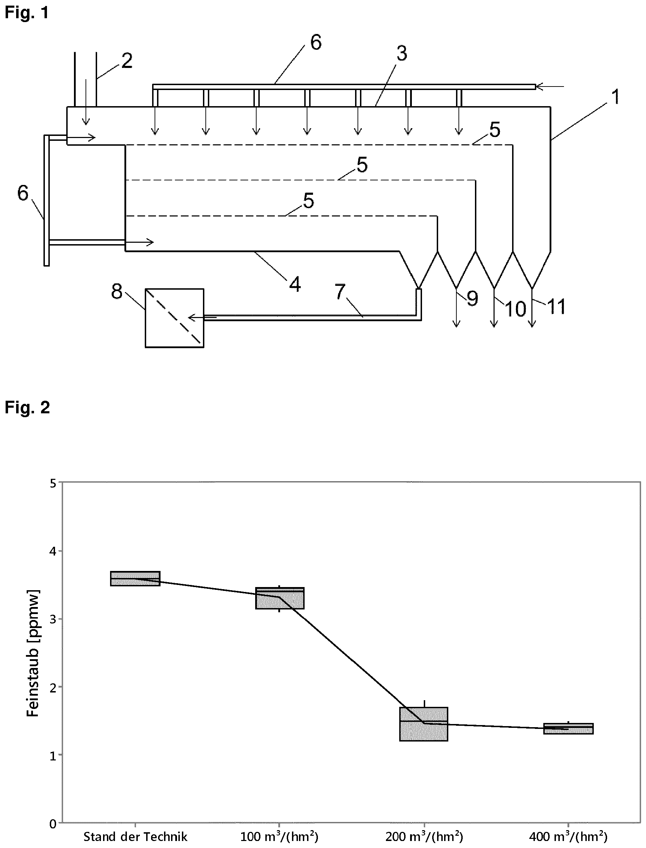

**Fig. 1** zeigt den schematischen Aufbau einer Vorrichtung zur Klassierung und Entstaubung von Polysiliciumgranulat.

Die Siebanlage **1** umfasst einen Deckel **3** und ein Boden **4**. Mittels der Produktaufgabe **2** wird das zu klassierende und zu entstaubende Polysiliciumgranulat eingebracht. Zur Klassierung sind Siebflächen bzw. Siebdecks **5** vorgesehen. Über die Gaszuführung **6** wird Gas eingeblasen. Das mit Staubpartikeln beladene Gas wird über die Gasabführung **7** aus der Siebanlage **1** abgeführt. Es ist ein Filter **8** für Staubpartikel vorgesehen, mit dem Feinstaub aus dem abgeführten Gasstrom entfernt werden kann. Das Polysilicumgranulat wird in drei Fraktionen (Unterkorn, Zielkorn, Oberkorn) klassiert. Für diese drei Fraktionen sind Austräge **9**, **10**, **11** vorgesehen.

### Vergleichsbeispiel und Beispiele

Im Vergleichsbeispiel und den Beispielen wurden die Konzentrationen an Feinstaub, Oberflächenkohlenstoff, Bor, Phosphor und Natrium an Polysiliciumgranulat, das auf unterschiedliche Weisen klassiert und entstaubt wurde, bestimmt.

Die Bestimmung der Kohlenstoffkonzentration an der Oberfläche erfolgte nach der sog. LECO-Methode, die in US 2013/0216466 A1 detailliert beschrieben ist.

Die Bestimmung von Bor und Phosphor erfolgte nach SEMI MF 1398 an monokristallinen Proben aus einem aus dem polykristallinen Material erzeugten FZ-Einkristall (SEMI MF 1723) mittels Photolumineszenz.

Die Bestimmung der Metallkonzentrationen (Natrium) erfolgte analog ASTM 1724-01 mittels ICP-MS (Massenspektrometrie mit induktiv gekoppeltem Plasma).

Das Abwaschen des Feinstaubs erfolgt analog zur Vorgehensweise in DE 10 2010 039754 A1. Der Feinstaubgehalt wird nicht mit einem Partikelgrößenmessgeräts gemessen, stattdessen wird der Staubgehalt durch UV/Vis-Spektroskopie photometrisch bestimmt. Die UV/Vis-Spektroskopie ist eine Spektroskopie, die elektromagnetische Wellen des ultravioletten (UV) und des sichtbaren (englisch visible, VIS) Lichts nutzt.

### Vergleichsbeispiel (nicht erfindungsgemäß)

Für das **Vergleichsbeispiel** wurde eine Siebanlage gemäß Stand der Technik (siehe WO 2015/032584 A1) verwendet, bei der der Staub aus dem Siebbereich abgesaugt wurde. Die Siebanlage war jedoch nicht nach außen geschlossen. Durch das Absaugen des Staubes und das damit verbundene Ansaugen von Umgebungsluft konnten Verunreinigungen auf die Produktoberfläche gelangen.

**Tabelle 1** zeigt die Ergebnisse für fünf Proben sowie die Mittelwerte.

**Tabelle 1**

| **Parameter** | Probe 1 | Probe 2 | Probe 3 | Probe 4 | Probe 5 | Mittelwert |
|---|---|---|---|---|---|---|
| **Feinstaub** [ppmw] | 3,5 | 3,7 | 3,5 | 3,7 | 3,6 | 3,6 |
| **Oberflächenkohlenstoff** [ppmw] | 0,251 | 0,269 | 0,243 | 0,26 | 0,238 | 0,2522 |
| **Bor** [ppta] | 21 | 25 | 28 | 31 | 25 | 26 |
| **Phosphor** [ppta] | 110 | 126 | 119 | 132 | 112 | 119,8 |
| **Natrium** [ppbw] | 0,21 | 0,18 | 0,44 | 0,2 | 0,13 | 0,232 |

Bei den Beispielen kamen das erfindungsgemäße Verfahren bzw. die erfindungsgemäße Vorrichtung zum Einsatz (gasdichte Siebanlage, Betrieb in Überdruck gegenüber der Umgebung). Zudem wurden Gasdurchsätze und damit die Strömungsgeschwindigkeiten in der Siebanlage variiert.

### Beispiel 1

Der aufgegebene Volumenstrom unter Normbedingungen bezogen auf die Siebfläche zur Spülung betrug 100 m³/(h m²).

**Tabelle 2** zeigt die Ergebnisse für fünf Proben sowie die Mittelwerte.

**Tabelle 2**

| **Parameter** | Probe 1 | Probe 2 | Probe 3 | Probe 4 | Probe 5 | Mittelwert |
|---|---|---|---|---|---|---|
| **Feinstaub** [ppmw] | 3,4 | 3,1 | 3,5 | 3,4 | 3,2 | 3,32 |
| **Oberflächenkohlenstoff** [ppmw] | 0,243 | 0,236 | 0,251 | 0,239 | 0,233 | 0,2404 |
| **Bor** [ppta] | 15 | 14 | 12 | 16 | 18 | 15 |
| **Phosphor** [ppta] | 80 | 65 | 74 | 83 | 68 | 74 |
| **Natrium** [ppbw] | 0,12 | 0,09 | 0,15 | 0,14 | 0,16 | 0,132 |
| | | | | | | |

### Beispiel 2

Der aufgegebene Volumenstrom unter Normbedingungen bezogen auf die Siebfläche zur Spülung betrug 200 m³/(h m²).

**Tabelle 3** zeigt die Ergebnisse für fünf Proben sowie die Mittelwerte.

**Tabelle 3**

| **Parameter** | Probe 1 | Probe 2 | Probe 3 | Probe 4 | Probe 5 | Mittelwert |
|---|---|---|---|---|---|---|
| **Feinstaub** [ppmw] | 1,2 | 1,6 | 1,5 | 1,8 | 1,2 | 1,46 |
| **Oberflächenkohlenstoff** [ppmw] | 0,18 | 0,206 | 0,176 | 0,194 | 0,213 | 0,1938 |
| **Bor** [ppta] | 12 | 13 | 16 | 15 | 15 | 14,2 |
| **Phosphor** [ppta] | 69 | 83 | 76 | 71 | 84 | 76,6 |
| **Natrium** [ppbw] | 0,1 | 0,14 | 0,13 | 0,11 | 0,14 | 0,124 |

### Beispiel 3

Der aufgegebene Volumenstrom unter Normbedingungen bezogen auf die Siebfläche zur Spülung betrug 400 m³/(h m²).

**Tabelle 4** zeigt die Ergebnisse für fünf Proben sowie die Mittelwerte.

**Tabelle 4**

| **Parameter** | Probe 1 | Probe 2 | Probe 3 | Probe 4 | Probe 5 | Mittelwert |
|---|---|---|---|---|---|---|
| **Feinstaub** [ppmw] | 1,3 | 1,3 | 1,4 | 1,4 | 1,5 | 1,38 |
| **Oberflächen kohlenstoff** [ppmw] | 0,201 | 0,169 | 0,195 | 0,188 | 0,206 | 0,1918 |
| **Bor** [ppta] | 15 | 16 | 13 | 15 | 18 | 15,4 |
| **Phosphor** [ppta] | 85 | 62 | 76 | 71 | 87 | 76,2 |
| **Natrium** [ppbw] | 0,13 | 0,14 | 0,12 | 0,14 | 0,12 | 0,13 |

Die **Fig. 2** **― 6** zeigen zur weiteren Veranschaulichung die Ergebnisse von **Vergleichsbeispiel** und **Beispielen 1-3** als Boxplots für die Parameter Feinstaub, Oberflächenkohlenstoff, Bor, Phosphor und Natrium.

Anhand der **Beispiele 1-3** ist erkennbar, dass es zu einer Verbesserung der Entstaubung durch das erfindungsgemäße Verfahren kommt.

Es ist weiterhin festzustellen, dass durch die Steigerung des Gasstroms eine weitere Verbesserung der Entstaubungsleistung zu verzeichnen ist.

Ab einem bestimmten Spülvolumenstrom ist keine weitere Verbesserung möglich.

In den dargestellten Beispielen ist zwischen den Volumenströmen unter Normbedingungen bezogen auf die Siebfläche von 200 m³/(h m²) und 400 m³/(h m²) keine weitere Reduzierung des Feinstaubgehalts messbar.

Dieses Verhalten deutet darauf hin, dass der Staub durch die Siebbewegung mobilisiert wird.

Es ist bevorzugt, eine Mindestgasmenge von 200 m³/(h m²) zu wählen, um den mobilisierten Staub auch aus dem Siebbereich auszutragen und somit eine Rückkontamination zu vermeiden.

Für den Oberflächenkohlenstoff, der in Form von Kunststoffrückständen oberflächlich am Polysiliciumgranulat und auch an den Silicumstaubpartikeln anhaftet, wird ein ähnliches Verhalten wie beim Feinstaub beobachtet. Durch das Austragen der Staubpartikel wird gleichzeitig ein Teil des Kunststoffabriebs mit ausgetragen.

Für die Elemente Bor und Phosphor konnte durch die gasdichte Fahrweise unter Überdruck gegenüber der Umgebung eine Verbesserung erzielt werden. Bei diesen Elementen, die über das Umfeld eingetragen werden, spielt die Spülgasmenge keine wesentliche Rolle, da die gasdichte Ausführung und die Überdruckfahrweise für den Effekt verantwortlich sind.

Für das Element Na, das typischerweise durch das Umfeld auf das Polysiliciumgranulat gelangen kann, konnte durch die gasdichte Ausführung der Siebanlage mit Überdruck gegenüber der Umgebung ebenfalls ein Eindringen in die Anlage verhindert werden. Als Resultat wurde ähnlich wie bei Phosphor und Bor eine Reduzierung des Wertes gegenüber dem **Vergleichsbeispiel** erzielt.

Die vorstehende Beschreibung beispielhafter Ausführungsformen ist exemplarisch zu verstehen. Die damit erfolgte Offenbarung ermöglicht es dem Fachmann die vorliegende Erfindung und die damit verbundenen Vorteile zu verstehen.

## Patentansprüche

1. Verfahren zur Klassierung und Entstaubung von Polysiliciumgranulat, wobei das Polysiliciumgranulat in eine Siebanlage (1) aufgegeben, mittels mehrerer Siebflächen (5) in Fraktionen aufgeteilt wird, wobei durch eine Wurfbewegung des Polysiliciumgranulats in der Siebanlage anhaftende Staubpartikel vom Polysiliciumgranulat abgetrennt werden, wobei die abgetrennten Staubpartikel mittels einer der Siebanlage zugeführten Gasströmung aus der Siebanlage abgeführt werden, wobei die Siebanlage gasdicht ausgeführt ist und Zufuhr und Abführung der Gasströmung derart erfolgen, dass in der Siebanlage Überdruck im Vergleich zur Umgebung herrscht und wobei die Siebanlage einen Deckel (3) und einen Boden (4) umfasst, **dadurch gekennzeichnet, dass** ein gleichmäßiges Einblasen eines Gasstroms am Deckel der Siebanlage über Filtrationsmatten während des Siebprozesses erfolgt, wodurch die Staubpartikel im Gleichstrom zum Partikelfluss zu einem Austrag am Boden der Siebanlage transportiert und als separate Fraktion am Boden der Siebanlage abgetrennt werden.

2. Verfahren nach Anspruch 1, wobei mittels einer Regeleinheit ein konstanter Überdruck im Vergleich zur Umgebung in der Siebanlage eingestellt wird.

3. Verfahren nach einem der Ansprüche 1 oder 2, wobei das Polysiliciumgranulat mittels einer Dosiereinheit in die Siebanlage aufgegeben wird.

4. Verfahren nach einem der Ansprüche 1 bis 3, wobei in der Siebanlage eine mittlere Gasgeschwindigkeit von 0,1 bis 0,4 m/s vorliegt.

5. Verfahren nach einem der Ansprüche 1 bis 4, wobei in der Siebanlage ein Überdruck im Vergleich zur Umgebung von 5 bis 50 mbar herrscht.

6. Verfahren nach einem der Ansprüche 1 bis 5, wobei der aufgegebene Volumenstrom der Gasströmung unter Normbedingungen und bezogen auf eine Siebfläche der Siebanlage mindestens 200 m³/(h m²) beträgt.

7. Vorrichtung zur Klassierung und Entstaubung von Polysiliciumgranulat, umfassend eine Siebanlage (1) mit integrierter Entstaubung des Polysiliciumgranulats, eine Einheit zur Aufgabe des Polysiliciumgranulats in die Siebanlage, mehrere Siebflächen (5), einen Austragsbereich zum Austragen von Staubpartikeln mittels einer in die Siebanlage eingebrachten Gasströmung, wobei die Siebanlage gasdicht ausgeführt ist, wobei die Siebanlage derart konfiguriert ist, dass im Betrieb Überdruck im Vergleich zur Umgebung herrscht, und einen Deckel (3) und einen Boden (4) umfasst, **dadurch gekennzeichnet, dass** am Deckel Filtrationsmatten zur gleichmäßigen Einbringung des Gases angeordnet sind und am Boden ein Austrag zur Abtrennung der Staubpartikel als separate Fraktion angeordnet ist.

## Claims

1. Method for classifying and dedusting granular polysilicon, wherein the granular polysilicon is fed into a screening plant (1), divided into fractions by means of a plurality of screen surfaces (5), wherein a throwing motion of the granular polysilicon in the screening plant removes adhering dust particles from the granular polysilicon, wherein the removed dust particles are taken off from the screening plant by means of a gas flow supplied to the screening plant, wherein the screening plant is of gas-tight design and supply and takeoff of the gas flow are effected such that the screening plant is at positive pressure compared to the surroundings and wherein the screening plant comprises a lid (3) and a bottom (4), **characterized in that** uniform injection of a gas stream is effected at the lid of the screening plant via filtration mats during the screening process, thereby transporting the dust particles in cocurrent with the particle flux to a discharge at the bottom of the screening plant and removing said particles as a separate fraction at the bottom of the screening plant.

2. Method according to Claim 1, wherein a constant positive pressure compared to the surroundings is established in the screening plant by means of a control unit.

3. Method according to either of Claims 1 and 2, wherein the granular polysilicon is fed into the screening plant by means of a metering unit.

4. Method according to any of Claims 1 to 3, wherein the average gas velocity in the screening plant is from 0.1 to 0.4 m/s.

5. Method according to any of Claims 1 to 4, wherein the screening plant is at a positive pressure compared to the surroundings of from 5 to 50 mbar.

6. Method according to any of Claims 1 to 5, wherein the supplied volume flow rate of the gas flow under standard conditions per unit screen area of the screening plant is at least 200 m³/(h m²).

7. Apparatus for classifying and dedusting granular polysilicon which comprises a screening plant (1) with integrated dedusting of the granular polysilicon, a unit for feeding the granular polysilicon into the screening plant, a plurality of screen surfaces (5), a discharge region for discharging dust particles by means of a gas flow introduced into the screening plant, wherein the screening plant is of gas-tight design, wherein the screening plant is configured such that the screening plant is operated at positive pressure compared to the surroundings and comprises a lid (3) and a bottom (4), **characterized in that** filtration mats for uniform introduction of the gas are disposed at the lid and a discharge for removal of the dust particles as a separate fraction is disposed at the bottom.

## Revendications

1. Procédé pour le triage et le dépoussiérage de granulat de polysilicium, dans lequel le granulat de polysilicium est chargé dans une unité de criblage (1), est réparti en fractions au moyen de plusieurs surfaces de criblage (5), dans lequel des particules de poussière adhérentes dans l'unité de criblage sont séparées du granulat de polysilicium par un mouvement de projection du granulat de polysilicium, dans lequel les particules de poussière séparées sont évacuées de l'unité de criblage au moyen d'un flux de gaz envoyé à l'unité de criblage, l'unité de criblage étant conçue étanche aux gaz, et l'entrée et la sortie du flux de gaz s'effectuent de telle façon qu'une surpression par rapport à l'environnement règne dans l'unité de criblage et dans lequel l'unité de criblage comprend un couvercle (3) et un fond (4), **caractérisé en ce que** pendant le processus de criblage une insufflation uniforme d'un flux de gaz s'effectue sur des mats filtrants au niveau du couvercle de l'unité de criblage, ce par quoi les particules de poussière sont transportées en courant parallèle au flux de particules vers une évacuation au niveau du fond de l'unité de criblage et sont séparées en tant que fraction séparée au niveau du fond de l'unité de criblage.

2. Procédé selon la revendication 1, dans lequel une constante surpression par rapport à l'environnement est établie dans l'unité de criblage au moyen d'une unité de réglage.

3. Procédé selon l'une quelconque des revendications 1 et 2, dans lequel le granulat de polysilicium est chargé dans l'unité de criblage au moyen d'une unité doseuse.

4. Procédé selon l'une quelconque des revendications 1 à 3, dans lequel une vitesse moyenne du gaz de 0,1 à 0,4 m/s est présente dans l'unité de criblage.

5. Procédé selon l'une quelconque des revendications 1 à 4, dans lequel une surpression par rapport à l'environnement de 5 à 50 mbars règne dans l'unité de criblage.

6. Procédé selon l'une quelconque des revendications 1 à 5, dans lequel le débit volumique chargé du flux de gaz dans des conditions normalisées et par rapport à une surface de criblage de l'unité de criblage est d'au moins 200 m³/(h m²).

7. Dispositif destiné au triage et au dépoussiérage de granulat de polysilicium, comprenant une unité de criblage (1) à dépoussiérage intégré du granulat de polysilicium, une unité destinée à la charge du granulat de polysilicium dans l'unité de criblage, plusieurs surfaces de criblage (5), une zone d'évacuation destinée à l'évacuation des particules de poussière au moyen d'un flux de gaz introduit dans l'unité de criblage, l'unité de criblage étant conçue étanche aux gaz, l'unité de criblage étant configurée de telle façon qu'en fonctionnement il y règne une surpression par rapport à l'environnement, et comprenant un couvercle (3) et un fond (4), **caractérisé en ce que** des mats filtrants destinés à l'introduction uniforme du gaz sont disposés au niveau du couvercle et une évacuation destinée à la séparation des particules de poussière en tant que fraction séparée est disposée au niveau du fond.
